(19)

Europäisches
Patentamt
European
Patent Office
Office européen
des brevets

(11) **EP 2 053 854 A1**

(12) **EUROPEAN PATENT APPLICATION**

(43) Date of publication:
29.04.2009 Bulletin 2009/18

(51) Int Cl.:
*H04N 5/765* (2006.01)     *H04N 5/85* (2006.01)
*H04N 5/782* (2006.01)     *H04N 5/907* (2006.01)

(21) Application number: 07118969.0

(22) Date of filing: 22.10.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Sony Corporation**
**Minato-ku**
**Tokyo 108-0075 (JP)**

(72) Inventor: **Beermann, Andreas**
**70327, Stuttgart (DE)**

(74) Representative: **Körber, Martin Hans**
**Mitscherlich & Partner**
**Sonnenstraße 33**
**80331 München (DE)**

(54) **Electronic device and method for operating an electronic device**

(57)     The present invention relates to an electronic device (1) comprising a connection unit (6) for enabling data communication between the electronic device and at least one further device, a controller (3) for controlling the operation of the electronic device, said controller (3) being adapted to send a request via the connection unit (6) to said further device and to receive information in response to said request from said further device via the connection unit (6), and an output means (2) for outputting the received information.

The present invention further relates to a method for operating an electronic device (1).

Fig. 2

**Description**

The present invention relates to an electronic device and to a method for operating an electronic device. Specifically, the present invention relates to the field of requesting information from a further device connected to the electronic device.

Electronic devices are used in a wide field of applications. Such devices may for example be a personal computer, a television, a video recorder, a DVD recorder, facsimile devices, digital cameras, mobile terminals for wireless communication or other electronic consumer devices. An important task in developing electronic devices is to simplify the handling and ensure the functionality.

Specifically when several electronic devices are connected with each other, then normally the user has to check each electronic device separately if he wants to get information on the respective electronic device, e.g. information on status, the remaining memory capacity and the like. This is very uncomfortable and time consuming to the user.

An example for this is that nowadays integrated digital television (IDTV) usually have an integrated electronic program guide (EPG) with the possibility to set up a recording timer on an external recording device, e.g. a DVD- or HDD-recorder directly from the graphical user interface of the electronic program guide. The disadvantage of this method is that the user does not have an overview of the remaining recording space on the recording media when setting the recording timer from the graphical user interface (GUI) of the IDTV. In case he sets a recording timer then he will only get a feedback after the timer has been set that the recording media can not carry out the complete recording.

It is therefore the objective problem of the present invention to provide an electronic device and a method for operating an electronic device which enables the electronic device to request information from other devices.

This object is solved by means of the independent claims, whereby independent claim 1 relates to an electronic device and independent claim 13 relates to a method for operating an electronic device.

The present invention relates to an electronic device comprising a connection unit for enabling data communication between the electronic device and at least one further device, a controller for controlling the operation of the electronic device, said controller being adapted to send a request via the connection unit to said further device and to receive information in response to said request from said further device via the connection unit, and an output means for outputting the received information.

Preferably, the controller is adapted to request predefined parameters of said information.

Further preferably, the controller is adapted to send a request for receiving information related to the memory capacity of the further device.

Alternatively, the controller is adapted to send a request for storing data onto the memory of said further device.

Preferably, the controller is adapted to receive information confirming the request for storing data.

Advantageously, the controller upon reception of confirmation is adapted to send a further request for storing a larger amount of data.

In a preferred embodiment, the controller is adapted to repeat the request of storing larger amounts of data until reception of a message indicating that the amount of data exceeds the memory capacity of the further device.

Preferably, the controller is adapted to receive information denying the request for storing data.

Advantageously, the controller upon receipt of the denial is adapted to send a further request for storing a smaller amount of data.

In the preferred embodiment the controller is adapted to repeat the request of storing smaller amounts of data until reception of a message indicating that the amount of data falls below the memory capacity of the further device.

Advantageously, the output means outputs the amount of memory capacity of the further device.

Preferably, the output means outputs information requested by the user, said information being adapted in accordance with the memory capacity of the further device.

The present invention further relates to a method for operating an electronic device comprising the steps of providing a connection unit for enabling data communication between the electronic device and at least one further device, sending a request to said further device via the connection unit, receiving information in response to said request from said further device via the connection unit and outputting the received information.

The method preferably comprises requesting predefined parameters of said information.

The method further preferably comprises sending a request for receiving information related to the memory capacity of the further device.

Alternatively the method comprises sending a request for storing data onto the memory of said further device.

Preferably the method comprises receiving information confirming the request for storing data.

Advantageously the method comprises sending a further request for storing a larger amount of data upon reception of confirmation.

In a preferred embodiment the method comprises repeating the request of storing larger amounts of data until reception of a message indicating that the amount of data exceeds the memory capacity of the further device.

Preferably, the method comprises receiving information denying the request for storing data.

Advantageously the method comprises sending a further request for storing a smaller amount of data upon receipt of the denial.

In the preferred embodiment the method comprises repeating the request of storing smaller amounts of data until reception of a message indicating that the amount of data falls below the memory capacity of the further device.

Preferably the method comprises outputting the amount of memory capacity of the further device.

Advantageously the method comprises adapting said information in accordance with the memory capacity of the further device and outputting information requested by the user.

The present invention will be explained in more detail in the following description of preferred embodiments in relation to the enclosed drawings in which

Fig. 1 shows a schematic block diagram of an electronic device according to the present invention,

Fig. 2 is a flow chart showing the process steps of the method according to the main idea underlying the present invention,

Fig. 3 is a flow chart showing the process steps of a method according to a preferred embodiment of the present invention,

Figures 4a and 4b show an example of an electronic program guide (EPG) according to the present invention, and

Figures 5a, 5b, 5c and 5d show different examples of a display of a television.

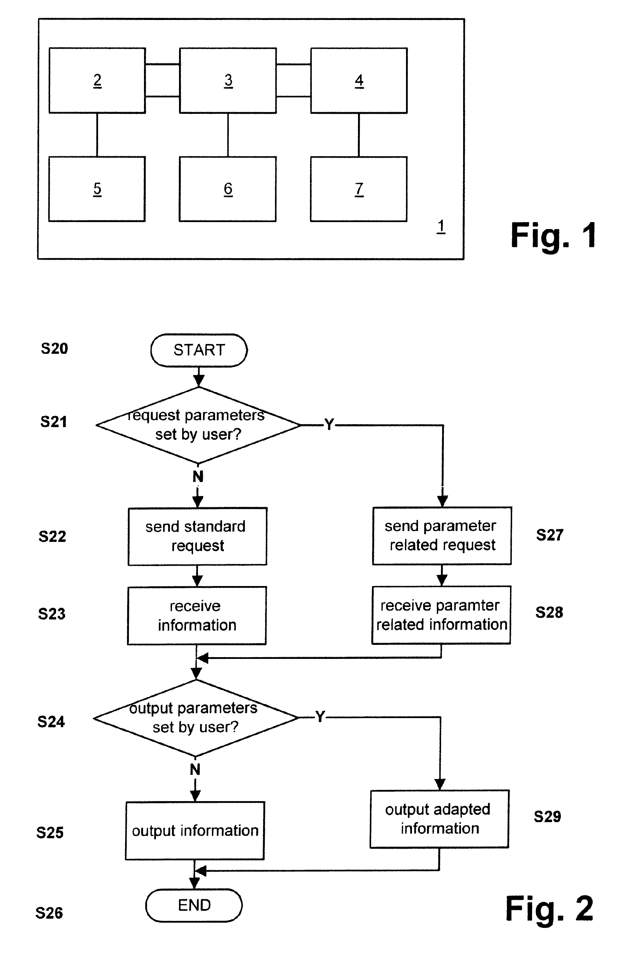

Fig. 1 is a schematic block diagram showing the elements of an electronic device 1 according to the present invention. The electronic device 1 comprises an output means 2 for outputting data and/or information to a user. The output means 2 herefore may be a display, a loud speaker or any other graphical user interface adapted to output data and/or information to the user.

The electronic device 1 further comprises an input means 5 for enabling input of data and/or information by a user. The input means herefore may be a keyboard, a mouse, a touchpad, recognition of speech or any other interface enabling the user to input data and/or information or to select applications or programs output by the output means 2.

The electronic device 1 further comprises a memory 4 for temporally or permanently storing data, information, programs, applications and the like. The memory 4 hereby may be divided into different memory spaces each providing different types of memory, for example a random access memory RAM, a flash memory or other types.

The electronic device 1 in addition comprises a power source 7 which may be batteries, a rechargeable battery pack or a connection to the electricity network or to another device from which power may be submitted to the electronic device 1.

In addition the electronic device 1 comprises a controller 3 connected to the output means 2, the input means 5, memory 4 and power source 7 and being in data communication with above-said components. The controller hereby controls and supervises the transmission and reception of data and/or information within the electronic device 1. The controller 3 further supervises the operation of the electronic device 1.

Additionally, a connection unit 6 within the electronic device I is provided which serves for connecting the electronic device to at least one further device or to a network and enables data communication of the electronic device 1 with the at least one further connected device. The connection unit 6 can hereby be any type of interface enabling a wired or wireless connection to the at least one further device.

The main idea according to the present invention is that the electronic device 1 can send a request via the connection unit 6 to at least one further device and can receive information from said further device in response to said request over said connection unit 6. It is to be noted that the term "request" when used in the present specification may refer to a query of sending information or may also refer to a command or instruction.

The process bases on the establishment of a connection between the electronic device and the at least one further device, sending of a request to the at least one further device, receiving information in response to said request from the at least one further device and outputting the received information. Hereby, the user may be enabled to take a hand in some process steps, e.g. to intervene. For example, the user may determine certain information types that should be requested from the at least one further device. The user may also determine, whether a request should be sent to all connected devices or only to a single device. When outputting the received information the user optionally can be enabled to set parameters determining which types of information he wants to get or in which way he wants to get the information.

In the following the main idea underlying the present invention will be explained with reference to Fig. 2.

The process starts in step S20, e.g. with switching on the electronic device 1. In the next step S21 the controller 3 checks if any request parameters have been set by the user. The user is for example able to input by the input means

parameters he wants to know when requesting information from the connected further device. Such parameters may e.g. relate to the type of requested information or the way the requested information should be transmitted. For example with the request parameters the user can decide whether he wants to receive information on the status, the memory capacity or other data relating to the further connected device or in case of a request for the memory capacity of the further device the user may specify whether he wants to receive the information in free space bytes, free space minutes or free space hours.

If in step S21 the controller 3 determines that no specific request parameters have been set by the user then in the next step S22 the controller via the connection unit 4 will send a request to the at least one further device for information. The request sent over the connection unit 6 in this case then will be a standard request according to predefined parameters. A standard request may for example comprise information on the status of the further device and/or the remaining memory capacity of the at least one further device. In the next step S23 the information is then received by the electronic device via the connection unit 6.

Otherwise if in step S21 the controller 3 determines that specific request parameters have been set by the user then in the next step S27 the controller 3 via connection unit 6 will send a parameter related request, i.e. information having specific type and/or format will be requested from the at least one further device depending on the parameters previously input by the user. In the next step S28 the electronic device 1 will then receive the parameter related information from the at least one further device.

In case that only one further device is connected to the electronic device then it is clear to which device a request for information should be send. Otherwise, if more than one device is connected to the electronic device, then the request may be send either to all devices or the user may be enabled to select via the input means 5 a specific device to which the request should be sent.

After receiving either the standard information in step S23 or the parameter related information in step S28 the controller 3 in a further step S24 checks whether the user has set output parameters. Such output parameters may relate to the type of information output by the output means 2 or to the way of presentation of the received information.

If the controller 2 in step S24 determines that the user has set no output parameters then in the next step S25 the output means 2 may output the information according to a standard procedure. For example all receive information will be output by the output means 2. Otherwise, if the controller 3 in step S24 determines that the user has set specific output parameters then in the next step S29 the information is output in an adapted way.

The process ends in any way with step S26 e.g. with switching off the electronic device 1.

It is to be noted that a term "request" may comprise either a query of sending information or may also comprise a command or instruction.

According to a first embodiment the request sent to the further connected device may be a command to query the required information. For example a command is adapted to query the memory capacity or recording capacity of the further connected device.

One possibility to implement this function is the use of a special consumer electronics control (CEC) command to query the information. Herefore, two CEC opcodes will be required: One for requesting the information and one for returning the requested information. Specifically in the case of an integrated digital television (IDTV) a CEC command can be sent to a recording device in order to receive information on the remaining recording space. The recording device will then have to answer this request by sending the information opcode and the requested information.

The following table gives an example of two possible CEC commands for requesting respectively receiving information relating to recording space.

| Opcode | Value | Description | Parameters | Parameter Description | Response | Directly Addressed | Broad cast |
|---|---|---|---|---|---|---|---|
| <Get free media space> | Hexa-decimal | Queries the maximum free space on the recording device | none | | Send <Free media space Status> | * | |

(continued)

| Opcode | Value | Description | Parameters | Parameter Description | Response | Directly Addressed | Broad cast |
|---|---|---|---|---|---|---|---|
| <Free media Space Status> | Hexa-decimal | Contains information about the free space on the current recording media | [free space bytes] [free space hours] [free space minutes] [free space seconds] | | | * | |

The first line of the table gives an overview of the contents of the respective column.

In the first column the opcode is shown, that is the name used to identify the message. In the present example the request for the memory capacity is called "Get free media space" and the message containing the requested information is called "Free media space status". In the second column the value is shown, that is the unique identifier for the message, which in the present example is a hexadecimal value but can be any other value having four, eight or another number of ciphers and/or letters.

In the third column follows a brief description of the message, which in the present invention clarifies that the first message send from the electronic device 1 to the at least further device is a request for the maximum free space of the further device and that the second message send from the at least one further device to the electronic device I contains the requested information of the free space.

In a further column the set of parameters used by the message is listed. In the present example for providing information on the free recording space on the further device the space can be transmitted in free bytes, free hours, free minutes or free seconds or in several types of the above-mentioned parameters.

Optionally in the next column a brief description of the parameters that the message uses can be added, which in the present example is omitted since the use of bytes, hours, minutes and seconds has no need for further explanations.

In the next column entitled Response it is described how a further device should respond on receipt of message. The last two columns indicate whether the message may be directly addressed or whether the message may be broadcast, whereby a broadcast message is a message send to a logical address which all devices are expected to receive. In the present invention the opcodes for receiving information on the recording space are directly addressed.

In case that the recording device has several recording qualities, e.g. long play (LP) short play (SP) etc. which result in different amount of space used on the recording media, the recording device should return the value of free space valid for the standard recording quality that would be used in case a recording timer would be set from the IDTV. A further possibility is for the user to input parameters as previously described before sending the request and to determine whether he wants to be informed on the remaining recording space in the case of long play or short play.

A second preferred embodiment will be explained in the following. Hereby the sent request does not include one single request but comprises several commands and in turn several answers from the at least one further connected device. The main idea of the second embodiment is to send a request to the further device and to receive the answer from the further device. After reception of the answer a further request can be sent which is adapted depending on the previously received answer.

An example for this is to send a request for storing data onto the memory of said further device. The electronic device 1 then receives either a confirmation or a denial of said further device depending on whether the memory capacity of the further device is sufficient for storing the requested amount of data or not. In case of a confirmation the electronic device 1 can then send further requests for storing larger amounts of data and to repeat the request of storing larger amounts of data until the further device sends a message indicating that the amount of data exceeds the memory capacity of the further device. On the other hand, in case the electronic device I receives a denial, the electronic device 1 will repeat the request of storing a smaller amount of data until reception of a message indicating that the amount of data now falls below the memory capacity of the further device.

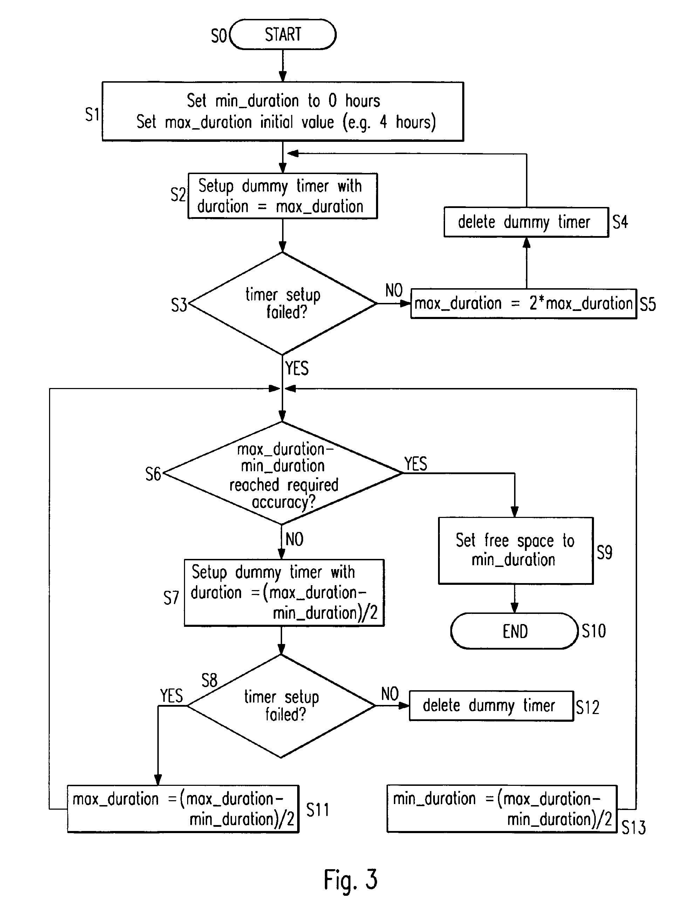

A more detailed example relating to the determination of recording space of a recording medium will be explained with reference to Fig. 3. Here fore a dummy timer is set up in order to receive information in order to receive either a confirmation or a denial from the recording device in order to know whether the said dummy timer exceeds the recording capacity. The time of the dummy timer is then either increased or decreased in order to test how much recording space is available on the recording medium.

The process starts in step S0 e.g. with switching on the IDTV. The controller 3 then in a first step S1 will choose two parameters, namely will choose a value for the parameter minimal duration which in the following is abbreviated by min_duration and a second value which is assigned to the maximum duration which in the following will be abbreviated with max_duration. As shown in step S1 the min_duration will be for example set to zero hours and the max_duration will be set to an initial value of 4 hours. These initial values can be variable, for example the user may change these initial values.

In the next step S2 a dummy timer is set up with a duration corresponding to max_duration. This timer is then send to the recording device in order to receive a confirmation or denial from the recording device. In the next step S3 the controller 3 checks by the received information from the recording device whether the timer setup has failed or not. If it is determined in step S3 that the setup has not failed, that is the recording medium has at least a capacity of max_duration then in the next step S5 the max_duration will be doubled. Otherwise, the max_duration can also be tripled or increased in any other way. Then in step S4 the previously set dummy timer will be deleted and a new dummy timer again in step S2 will be set having the new duration corresponding to the increased max_duration. The process then continues in step S3 where it is determined whether the timer setup has failed.

Otherwise if the controller 3 in step S3 determines that the timer setup has failed then in the following the duration for the timer will be reduced.

In the next step S6 it will be then checked whether the required accuracy has been reached. The accuracy may hereby be calculated by subtracting the min_duration from the max_duration. If the required accuracy has not yet been reached then in the next step S7 a new dummy timer will be set up with a duration of

$$duration = \frac{\max\_duration - \min\_duration}{2},$$

so that the duration of the dummy timer is decreased. But any other possibility of decreasing the duration can be used.

In the next step S8 it is again determined whether the set up dummy timer has been failed. In case if in step S8 the timer set up has failed then the process will continue with step S 11 where new max_duration is defined as

$$new\,\max\_duration = \frac{\max\_duration - \min\_duration}{2}$$

and then the process again goes to step S6 where it is determined whether the required accuracy has been reached.

Otherwise if in step S6 it is determined that the required accuracy has been reached then the process continues with step S9 where the free space is determined as corresponding to min_duration. This information will then be output by the output means 2. The process then ends in step S10.

If in step S8 the timer setup has not failed then the dummy timer in step S12 will be deleted and in step S13 the new min_duration will be set to

$$new\,\min\_duration = \frac{\max\_duration - \min\_duration}{2}$$

and the process continues with step S6 where it is checked whether the required accuracy has been reached.

The present invention is not limited to the embodiment comprising an integrated digital television and a recording device. The principle of setting a dummy command and depending on the response of the further connected device changing the dummy command can also be applied to different types of electronic devices and to different types of required information.

A possible parameter related output is shown in Figures 4a and 4b. Fig. 4a shows an example of an electronic program guide (EPG). Hereby, in every line the different programs of a channel are shown which in the present example are four channels. In the columns the starting times of the different types of broadcasted TV programs are shown. In the present example on channel 1 from eight o'clock to eleven o'clock a show 1 is broadcast and on channel 3 from ten to eleven o'clock news 2 is broadcast. In case the user now on basis of this electronic program guide wants to record one or more of the broadcast programs, then he may be interested in the remaining recording space on his recording device. When setting the output parameters the user may determine that he wants to get marked all the programs that are recordable with the remaining recording space of his recording device.

Such an example is shown in Fig. 4b. Fig. 4b shows the same electronic program guide as Fig. 4a but several programs are marked. In the present example the recording device has a recording space of two hours and 27 minutes and therefore all programs which last a maximum of two hours and 27 minutes are marked as being recordable by the recording medium. Additionally, the remaining recording space, e.g. by inserting the text "Free Space 2h 27min", is shown in the EPG as shown in Fig. 4b.

With the present invention the user is enabled to receive information from other devices by only operating a single electronic device 1. Specifically in the case of an IDTV and a recording medium the user has a display of the remaining recoding time on the recording medium directly in the graphical user interface of the IDTV. The IDTV can therefore check if a timer recording is possible before the customer select an event for recording. As explained with reference to Fig. 4b this would allow marking all events that fit on the recording media as recordable and on the other hand marking all events as not recordable that do not fit on the recording medium.

The IDTV can thereby inform the user about the current amount of free space on the recording media directly in the graphical user interface of the IDTV either by showing the remaining recording in hours and minutes or by showing any other indication informing the user on the remaining recording space, e.g. percentage of the total recording capacity, remaining capacity in Megabytes or the like.

An IDTV with an integrated EPG is able to start a recording function on an external DVD-/HDD/-Video recorder, but is not able to filter prior to the recording instruction those programmes out which exceed the recording capacity of the recording device. This function normally can only be accomplished by the recording device itself. The invention overcomes this problem by providing a data communication between the IDTV and the recording device which allows by means of data communication to determine the capabilities of the recording device and to adapt the EPG of the IDTV accordingly.

More generally speaking, with the present invention it is possible to create a graphical user interface (GUI) on the IDTV in a way as if the recording device were a part integrated in the IDTV.

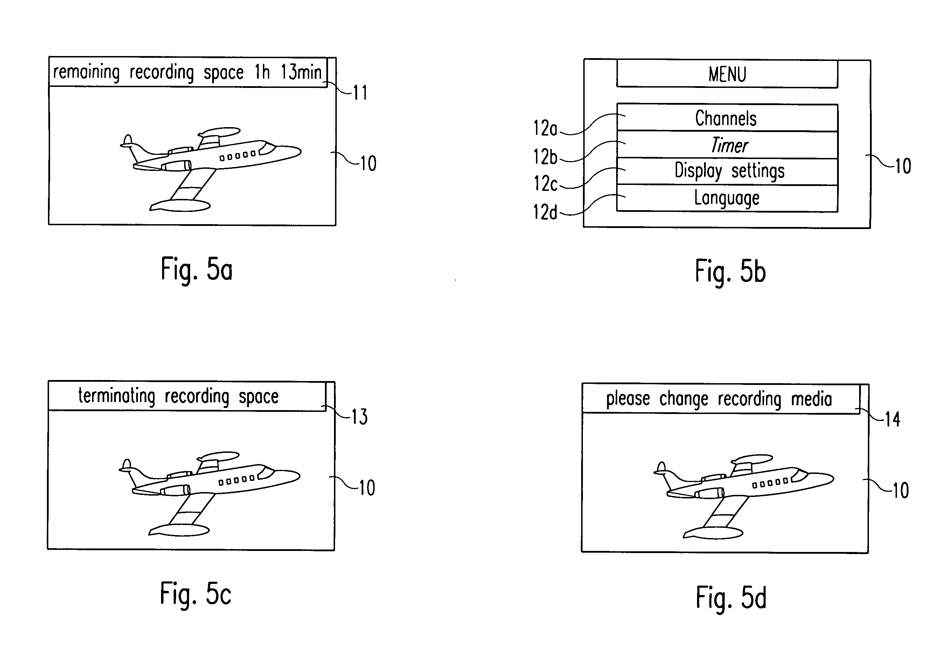

Further examples of informing the user on features related to recording functions and recording capacity are shown in Fig. 5a to 5d.

Fig. 5a shows the display 10 of an IDTV with an information banner 11, which is usually displayed in case of a channel change or input changes or on user request. This information banner I 1 can show status information regarding the remaining recording space of the recording media, e.g. the text message "remaining recording space 1h 13min" as shown in Fig. 5a. Optionally the information banner 11 is only shown in case of either an ongoing recording or in case that a timer has been set.

Fig. 5b shows the display 10 with a menu comprising several selectable menu options 12a, 12b, 12c, 12d. Hereby, according to present invention in case that no recording space at all is available, the menu option for setting a timer 12b can be visually marked as not being available at present, e.g. by greying it out. Otherwise a warning message can be displayed when no recording can be made due to a full recording media. This warning message can be displayed as soon as the user enters the menu or only in case the user tries to set a timer. It is also possible that the IDTV warns the user when a recording will not fit on the recording media and it can show the remaining recording time with this message. The user can then decide to either record the event incompletely or not to record it at all.

Fig. 5c shows an indication message 13 which could be displayed in case that the user has set a recording without a termination thereby indicating that the recording space is terminating soon. Such a message can be shown some minutes before the end of the recording media is reached, e.g. by displaying the text "terminating recording space", in order to indicate that the recording will stop soon.

According to the present invention, even when connecting several devices to an electronic device, the handling the number of connected device is still simple since only one single electronic device 1 has to be operated as the currently active device. The IDTV optionally can also manage a hand-over from a first recording device to a second recording device in case the recording space on the first recording device has terminated. In this case the IDTV sends a recording command to the second recording device which continues the recording either seamlessly or with a short overlapping time where both devices record the same program in order not to loose content. The IDTV can then inform the user as shown in Fig. 5d by displaying a text message 14 on the display 10 indicating that the recording media of the first device must be replaced to allow this device to record some new content. With this method very long recordings can be made by alternating between two or more recording devices. In this case the recording time is only limited by the recording media available for the user.

**Claims**

1.  Electronic device (1) comprising
    a connection unit (6) for enabling data communication between the electronic device and at least one further device,

a controller (3) for controlling the operation of the electronic device, said controller (3) being adapted to send a request via the connection unit (6) to said further device and to receive information in response to said request from said further device via the connection unit (6), and
an output means (2) for outputting the received information.

2. Device (1) according to claim 1,
   wherein the controller (3) is adapted to request predefined parameters of said information.

3. Device (I) according to claim 1 or 2,
   wherein the controller (3) is adapted to send a request for receiving information related to the memory capacity of the further device.

4. Device (1) according to claim 1 or 2,
   wherein the controller (3) is adapted to send a request for storing data onto the memory of said further device.

5. Device (1) according to claim 4,
   wherein the controller (3) is adapted to receive information confirming the request for storing data.

6. Device (1) according to claim 5,
   wherein the controller (3) upon reception of confirmation is adapted to send a further request for storing a larger amount of data.

7. Device (1) according to claim 6,
   wherein the controller (3) is adapted to repeat the request of storing larger amounts of data until reception of a message indicating that the amount of data exceeds the memory capacity of the further device.

8. Device (1) according to any of claims 4 to 7,
   wherein the controller (3) is adapted to receive information denying the request for storing data.

9. Device (1) according to claim 8,
   wherein the controller (3) upon receipt of the denial is adapted to send a further request for storing a smaller amount of data.

10. Device (1) according to claim 9,
    wherein the controller (3) is adapted to repeat the request of storing smaller amounts of data until reception of a message indicating that the amount of data falls below the memory capacity of the further device.

11. Device (1) according to any of claims 3 to 10,
    wherein the output means (2) outputs the amount of memory capacity of the further device.

12. Device (1) according to claim 11,
    wherein the output means (2) outputs information requested by the user, said information being adapted in accordance with the memory capacity of the further device.

13. Method for operating an electronic device (1) comprising the steps of providing a connection unit (6) for enabling data communication between the electronic device and at least one further device,
    sending a request to said further device via the connection unit (6),
    receiving information in response to said request from said further device via the connection unit (6) and outputting the received information.

14. Method according to claim 13,
    comprising requesting predefined parameters of said information.

15. Method according to claim 13 or 14,
    comprising sending a request for receiving information related to the memory capacity of the further device.

16. Method according to claim 13 or 14,
    comprising sending a request for storing data onto the memory of said further device.

**17.** Method according to claim 16,
comprising receiving information confirming the request for storing data.

**18.** Method according to claim 17,
comprising sending a further request for storing a larger amount of data upon reception of confirmation.

**19.** Method according to claim 18,
comprising repeating the request of storing larger amounts of data until reception of a message indicating that the amount of data exceeds the memory capacity of the further device.

**20.** Method according to any of claims 16 to 19,
comprising receiving information denying the request for storing data.

**21.** Method according to claim 20,
comprising sending a further request for storing a smaller amount of data upon receipt of the denial.

**22.** Method according to claim 21,
comprising repeating the request of storing smaller amounts of data until reception of a message indicating that the amount of data falls below the memory capacity of the further device.

**23.** Method according to any of claims 15 to 22,
comprising outputting the amount of memory capacity of the further device.

**24.** Method according to claim 23,
comprising adapting said information in accordance with the memory capacity of the further device and outputting information requested by the user.

**Fig. 1**

**Fig. 2**

S0 ( START )

S1 | Set min_duration to 0 hours
Set max_duration initial value (e.g. 4 hours) |

S2 | Setup dummy timer with
duration = max_duration |

S4 | delete dummy timer |

S3 ◇ timer setup failed? ◇ — NO → S5 | max_duration = 2*max_duration |

YES

S6 ◇ max_duration−
min_duration
reached required
accuracy? ◇ — YES →

S9 | Set free space to
min_duration |

NO

S7 | Setup dummy timer with
duration =(max_duration−
min_duration)/2 |

S10 ( END )

S8 ◇ timer setup
failed? ◇

YES — S8

NO → S12 | delete dummy timer |

S11 | max_duration =(max_duration−
min_duration)/2 |

S13 | min_duration =(max_duration−
min_duration)/2 |

Fig. 3

MENU

Channels — 12a

*Timer* — 12b

Display settings — 12c

Language — 12d

10

**Fig. 5b**

please change recording media — 14

10

**Fig. 5d**

remaining recording space 1h 13min — 11

10

**Fig. 5a**

terminating recording space — 13

10

**Fig. 5c**

**European Patent Office**

**EUROPEAN SEARCH REPORT**

Application Number

EP 07 11 8969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/002256 A1 (KAMIO) 5 January 2006 (2006-01-05) <br><br> * paragraph [0011] - paragraph [0016] * <br> * paragraph [0038] * | 1-5,8, 11-17, 20,23,24 | INV. H04N5/765 H04N5/85 H04N5/782 H04N5/907 |
| Y | * paragraph [0041] - paragraph [0052] * <br><br><br> * paragraph [0057] * <br> * figures 1-6 * <br> ----- | 1,6,7,9, 10,13, 18,19, 21,22 | |
| Y | US 2004/091242 A1 (WENG ET AL) 13 May 2004 (2004-05-13) <br><br><br> * paragraph [0008] * <br> * paragraph [0021] * <br> * paragraph [0024] * <br> * figure 1 * <br> ----- | 1,6,7,9, 10,13, 18,19, 21,22 | |
| X | US 7 240 081 B1 (OKAYASU ET AL) 3 July 2007 (2007-07-03) <br><br> * column 2, line 4 - line 52 * <br> * column 4, line 24 - column 5, line 45 * <br> * column 7, line 34 - line 41 * <br> * column 12, line 48 - line 61 * <br> * figures 2-5 * <br> ----- | 1-5, 11-17, 23,24 | **TECHNICAL FIELDS SEARCHED (IPC)** <br><br> H04N |
| X | US 2004/174442 A1 (CHOSA) 9 September 2004 (2004-09-09) <br><br> * paragraph [0016] * <br> * paragraph [0029] - paragraph [0032] * <br> * paragraph [0042] - paragraph [0051] * <br> * figures 1,2 * <br> ----- | 1-4,8, 11-16, 20,23,24 | |

The present search report has been drawn up for all claims

| Place of search | Date of completion of the search | Examiner |
|---|---|---|
| Munich | 23 May 2008 | Fragua, Miguel Angel |

## ANNEX TO THE EUROPEAN SEARCH REPORT
## ON EUROPEAN PATENT APPLICATION NO.

EP 07 11 8969

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2008

| Patent document cited in search report | Publication date | Patent family member(s) | Publication date |
|---|---|---|---|
| US 2006002256 A1 | 05-01-2006 | JP 2006018538 A | 19-01-2006 |
| US 2004091242 A1 | 13-05-2004 | JP 2004164761 A | 10-06-2004 |
| US 7240081 B1 | 03-07-2007 | JP 2000222862 A | 11-08-2000 |
| US 2004174442 A1 | 09-09-2004 | CN 1527597 A<br>JP 2004266761 A | 08-09-2004<br>24-09-2004 |